# EUROPEAN PATENT SPECIFICATION

(11) **EP 2 202 092 B1**
(45) Date of publication and mention of the grant of the patent: **26.10.2011**
(21) Application number: 08172926.1
(22) Date of filing: 24.12.2008
(51) Int. Cl.: B60B 27/00

(54) **Coupling of a constant velocity joint and a hub bearing unit of a motor vehicle wheel**
Verbindung eines Gleichlaufgelenks und einer Nabenlagereinheit eines Kraftfahrzeugrades
Couplage d'un joint à vitesse constante et d'une unité de moyeu d'une roue de véhicule à moteur

(43) Date of publication of application: 30.06.2010
(73) Proprietor: Aktiebolaget SKF, 415 50 Göteborg (SE)
(72) Inventor: Concu, Cristian, 10137 Torino (IT)
(74) Representative: Fioravanti, Corrado

(56) References cited:
- EP-A- 1 777 079
- WO-A-2007/134157
- DE-A1-102007 018 803
- US-A1- 2002 070 506
- US-B1- 6 354 952

## Description

The present invention refers to the coupling between a constant velocity joint and a hub bearing unit of a motor vehicle wheel.

Arrangements are known from patent publications US 2002/0070506 Al and US 6 354 952 B1 wherein the hub of the wheel receives the driving torque from the bell of the constant velocity joint through a straight splined coupling. To this end, fixed on the hub is a ring with an axial outer toothing that is telescopically inserted in a tubular projection with an inner axial toothing of the outer part or "bell" of the constant velocity joint. The toothed ring and the tubular projection are both provided with a respective circular groove in which an elastic, open ring (or circlip or seeger ring) is fitted in order to axially lock the hub to the joint.

The above conventional arrangement, although being highly serviceable, has a limit due to scarce sealing. The aforesaid elastic ring has two gripping arms at its ends that project through a slot formed at the axially outer end (or outboard end) of the joint bell. Illustrated in fig. 5 of US 2002/0070506 is a rubber sleeve covering the slot in order to seal it. A scarcely efficient sealing allows water to penetrate, especially through the slot formed at the end of the joint bell, into the splined interface zone. Rust formed at the interface of the splined coupling renders the disassembling operation of the hub-bearing unit from the constant velocity joint particularly difficult, besides shortening the life of this members.

It is a primary object of the invention to optimize the hermetic sealing action at the interface zone between the constant velocity joint and the hub bearing unit, closing the passages through which water may leak into the inner parts of the constant velocity joint and preventing water from accessing the splined coupling between the joint and the hub-bearing unit. Another object of the invention is to facilitate the steps of assembling and disassembling the hub-bearing unit to and from the constant velocity joint.

These objects are achieved, according to an aspect of the invention, by a coupling arrangement as defined in claim 1. Briefly summarized, the invention provides a rigid cap member received in the cavity of the bell member of the constant velocity joint and axially abutting against a radial shoulder formed within the bell member. The hub and the constant velocity joint are releasably axially secured by a fastening means releasably connecting the cap to the hub in an axially tractive relationship. That axial traction causes axial compression of an annular sealing gasket fitted between the bell member and the hub-bearing unit. As a result, continuous sealing action is provided around the engaging splines of the bell member and the driving ring fixed to the hub.

A conventional straight splined coupling has a drawback due to the high noise that can be heard when the car is put into reverse, owing to the circumferential play between the splines on the bell of the constant velocity joint and the driving ring fixed on the hub.

It is a further object of the invention to overcome the above mentioned drawback concerning the noise. This other object is achieved, according to an aspect of the invention, by a coupling as defined in claims 10 or 11. The splined coupling is modified so that one of the two coupling members, i.e. the joint bell or the driving ring, has involute splines whereas the other member has straight axial splines. Owing to the engagement of the different splines the relative angular or circumferential play between the constant velocity joint and the hub is taken up.

Preferred embodiments of the invention are set forth in the dependent claims.

A few preferred, but not limiting embodiments of the invention will now be described, reference being made to the accompanying drawings, in which:
- figure 1 is a partial axial cross sectional view of a first embodiment of an assembly comprising a constant velocity joint coupled to a hub-bearing unit;
- figure 2 schematically depicts the layout of the splines of two members of the assembly of figure 1 coupled together in accordance with the invention; and
- figures 3 and 4 are cross sectional views of two variants of the invention with axial coupling components different from that of fig. 1.

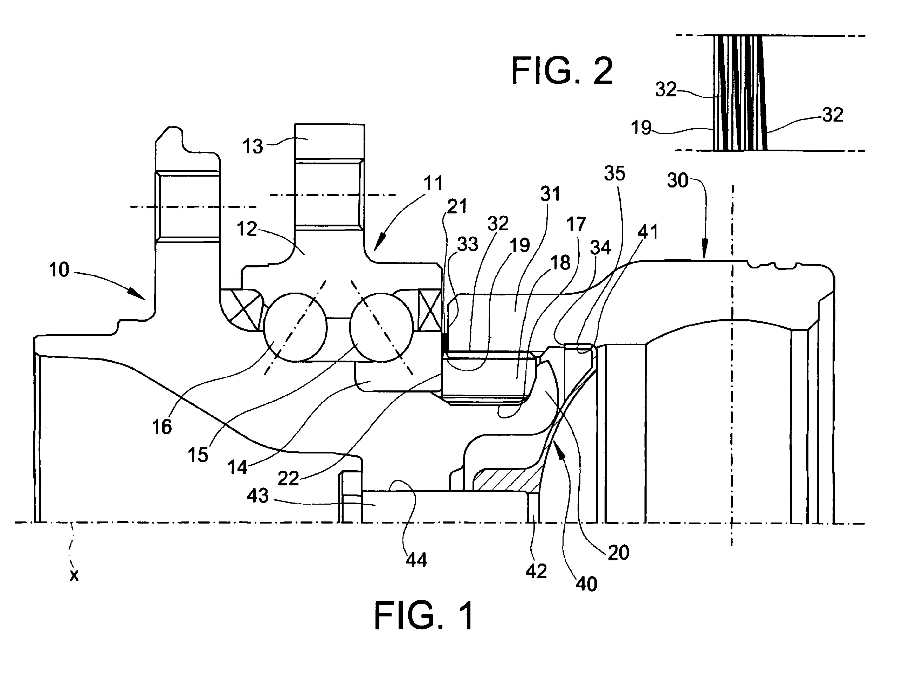

With reference initially to figure 1, a hub 10 for a driving wheel of a motor vehicle is rotatably mounted in the suspension standard (not shown) of the motor vehicle through a bearing unit 11 which includes an outer stationary ring 12 having a flange 13 fixed to the standard through bolts (not shown). Locked onto the hub 10 is a rotatable inner bearing ring 14 that forms the inner raceway for one of the two sets of balls 15, 16 of the bearing unit.

The hub has a cylindrical surface 17 towards its axially outer end, onto which there is fixed a driving ring 18 with outer axial splines or teeth 19 for transferring the driving torque from the bell 30 of the constant velocity joint to the hub. As used herein, terms such as circumferential, radial, or axial are to be construed with respect to the central axis of rotation x of the hub.

The driving ring 18 is securely axially locked against the inner bearing ring 14 by cold forming, preferably by orbital rolling, of an end edge 20 of the hub. At its axially outer side, the joint bell 30 forms a tubular projection 31 in which the driving ring 18 is telescopically fitted. Formed within the tubular projection 31 are inner axial splines 32 which couple with the outer splines 19 of the driving ring 18.

The two engaging splines are of different types. Whereas the outer splines 19 of the driving ring are axially straight, the inner ones 32 of the joint bell are involute, or vice versa. The helical pitch of the involute splines is long enough to allow an initial effortless insertion of the driving ring 18 into the joint bell, preferably with a slight angular play between these two members. As the insertion proceeds, the flanks of the straight axial splines and the involute splines come into contact, taking up the angular play between the hub and the joint bell. Preferably, the helical pitch of the involute splines is chosen so as to require some degree of axial force to reach the fully coupled condition shown in the drawing. This condition is schematically shown in figure 2, where each involute spline (black) contacts, at a first end thereof, one of the two successive straight axial splines between which it is inserted and, at its second end, it touches the other axial spline.

As clearly shown in figure 1, the outermost diameter of the driving ring 18 is smaller than the maximum diameter of the inner bearing ring 14. An elastic sealing ring 21 is axially compressed between two radial surfaces facing one another, namely the axially outer face 33 of the bell 30 and the facing axially inner face 22 of the bearing ring 14.

The hub and the constant velocity joint are axially removably joined by an inner cap 40 which is received in the cavity of the joint bell and closes it towards the outside. The cap has peripheral edge or skirt 41 axially abutting against a radial shoulder 34 formed within the cavity of the bell. The cap 40 provides a central threaded bore 42 in which there is screwed a fastening element 43, for example a screw, fitted through a bore 44 that runs centrally through the hub and that can be tightened from the outside. Tightening the screw 43 brings the hub closer to the joint and causes axial compression of the sealing ring 21, thereby assuring a particularly efficient sealing action at the interface between the hub and the constant velocity joint.

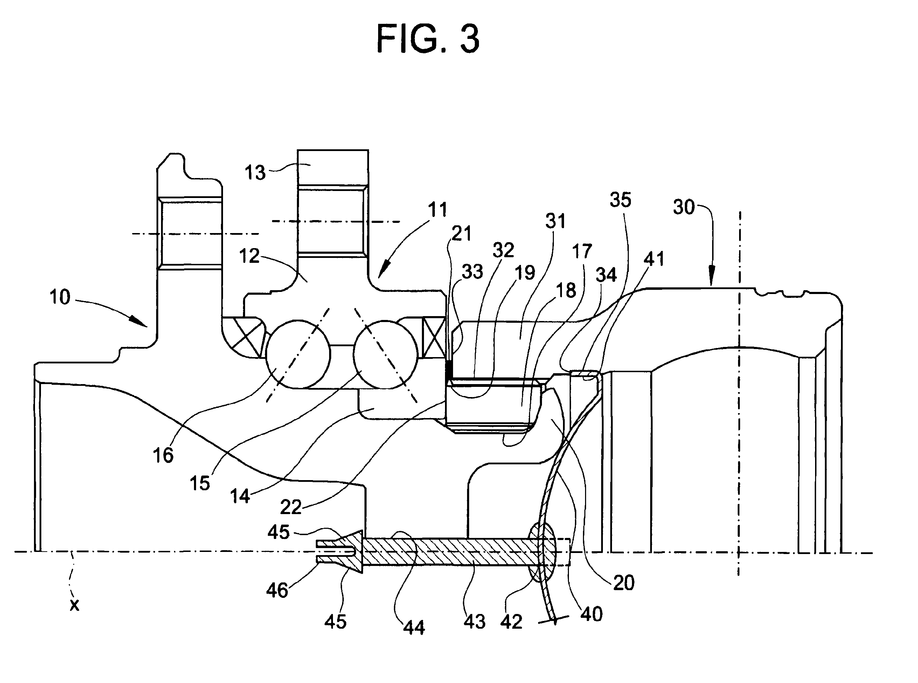

In the alternative embodiment of figure 3, the fastening element 43 is a pin of plastics material, with an axially inner end clinched to the cap 40. The axially outer end of the pin is tapered with wedge portions 45 in order to be slipped through the bore 44 and snap-locked onto the hub. The fastening pin 43 provides a pair of gripping appendixes 46 which can be elastically brought near to one another by means of a hand tool means of a hand tool.

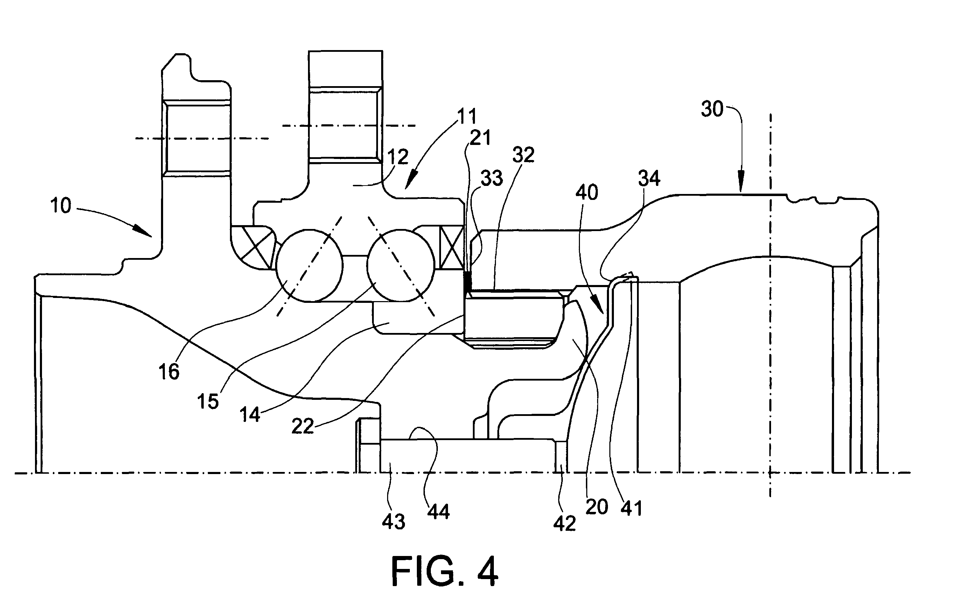

The variant of figure 4 differs from the embodiment of figure 1 in the outline of the peripheral skirt 41. Whereas in figure 1 the skirt 41 is so folded as to have its free end facing the axially outer or outboard direction, in figure 4 the free end of the skirt 41 is facing the axially inner or inboard direction. The cap 40 is fitted into the joint bell from the right, preferably in a slightly forced manner. The skirt 41 may have a conical or flared non-deformed free condition, as depicted in phantom in figure 4, so as to snap fit in an annular groove 35 obtained in the bell cavity when the skirt 41 abuts against the shoulder 34. The skirt 41 may be circumferentially continuous or discrete, for example comprising a plurality of circumferentially adjacent fins.

As will be appreciated, the axial locking by means of the inner cap avoids the conventional circlip and the relevant slot in the bell for accessing the end gripping arms of the circlip. Hermetic seal is ensured continuously around the splined coupling due to the ring compressed between the bell joint and the bearing unit. This arrangement, that provides for a sealing member being compressed and, to some extent, protected by two facing surfaces, is also more reliable in time with respect to the seal provided by a rubber sleeve of known kind, relatively thin and more delicate and subject to deterioration. It will also be appreciated that the absence of angular play between the hub and the joint bell eliminates the noise that is heard when the car is put into reverse with a splined coupling of conventional design.

Variations and modifications of the foregoing are within the scope of the present invention. Those skilled in the art will readily recognize that the invention can be equally implemented if the involute splines are formed on the driving ring and the straight ones on the joint bell.

## Claims

1. A coupling arrangement between a hub bearing unit for a motor vehicle wheel and an associated constant velocity joint, the hub bearing unit including a rotatable hub (10) to which a driving ring (18) is fixed for providing torque transmission to the hub from an outer, rotatable bell member (30) of the constant velocity joint,
the bell member (30) having a tubular projection (31) in telescopic relation with the driving ring (18), with a first end surface (33) of the tubular projection (31) facing a second surface (22) of a rotatable member (14) of the hub bearing unit,
the driving ring (18) and the tubular projection (31) having respective outer (19) and inner (32) mutually engaging splines,
**characterised in that** the hub and the constant velocity joint are releasably axially secured by
a rigid cap member (40) received in the cavity of the bell member and axially abutting against a radial shoulder (34) formed within the bell member, and
a fastening means (43) releasably connecting the cap member to the hub (10) in an axially tractive relationship,
whereby said axial traction causes axial compression of an annular sealing member (21) which is fitted between said first (33) and second (22) surfaces and provides continuous sealing action around the engaging splines (19, 32).

2. A coupling arrangement according to claim 1, **characterised in that** the cap member (40) forms a peripheral skirt (41) axially abutting against the radial shoulder (34) within the cavity of the bell member (30).

3. A coupling arrangement according to claim 1 or 2, **characterised in that** the fastening means (43) include a threaded member screwed in a central threaded bore (42) of the cap member (40) and fitted through an axial bore (44) running centrally through the hub (10) and that can be tightened from the outside.

4. A coupling arrangement according to claim 1 or 2, **characterised in that** the fastening means (43) include a pin secured or integral with the cap member (40), the pin being fitted through an axial bore (44) that runs centrally through the hub (10), the pin further including snap mounting means (45) providing quick connection to the hub.

5. A coupling arrangement according to claim 4, **characterised in that** the pin (43) has an axially outer end with a pair of gripping appendixes (46) projecting axially outwardly of the bore (44) of the hub so as to be elastically brought near to one another by means of a tool in order to disengage the snap mounting means (45) from the hub (10).

6. A coupling arrangement according to claim 1, **characterised in that** the cap member (40) closes the internal cavity of the bell member (30) towards the outside.

7. A coupling arrangement according to claim 2, **characterised in that** the peripheral skirt (41) is forcefully fitted into an annular groove (35) formed in the bell cavity.

8. A coupling arrangement according to claim 2, **characterised in that** the peripheral skirt (41) has a free end facing an axially outer direction.

9. A coupling arrangement according to claim 2, **characterised in that** the peripheral skirt (41) has a free end facing an axially inner direction.

10. A coupling arrangement according to any one of the preceding claims, **characterised in that** the splines (19) of the driving ring (18) are axially straight splines, and the splines (32) of the tubular projection (31) are involute splines.

11. A coupling arrangement according to any one of claims 1 to 10, **characterised in that that** the splines (32) of the tubular projection (31) are axially straight splines, and the splines (19) of the driving ring (18) are involute splines.

12. A coupling arrangement according to any one of the preceding claims, **characterised in that that** the outermost diameter of the driving ring (18) is smaller than the maximum diameter of the inner bearing ring (14) providing said second surface (22).

13. A coupling arrangement according to any one of the preceding claims, **characterised in that that** said first (33) and second (22) surfaces are radial surfaces facing one another.

## Patentansprüche

1. Kupplungsanordnung zwischen einer Nabenlagereinheit für ein Kraftfahrzeugrad und einem zugehörigen Gleichlaufgelenk, wobei die Nabenlagereinheit eine drehbare Nabe (10) enthält, an der ein Antriebsring (18) zur Bereitstellung von Drehmomentübertragung auf die Nabe von einem äußeren drehbaren Glockenglied (30) des Gleichlaufgelenks befestigt ist,
wobei das Glockenglied (30) einen röhrenförmigen Vorsprung (31) in teleskopischer Beziehung zu dem Antriebsring (18) aufweist, wobei eine erste Endfläche (33) des röhrenförmigen Vorsprungs (31) zu einer zweiten Fläche (22) eines drehbaren Glieds (14) der Nabenlagereinheit weist,
wobei der Antriebsring (18) und der röhrenförmige Vorsprung (31) jeweilige äußere (19) und innere (32) Keilverzahnungen aufweisen, die miteinander in Eingriff stehen,
**dadurch gekennzeichnet, dass** die Nabe und das Gleichlaufgelenk durch
ein starres Kappenglied (40), das in dem Hohlraum des Glockenglieds aufgenommen ist und an einer im Glockenglied ausgebildeten radialen Schulter (34) axial anliegt, und
Befestigungsmittel (43), die das Kappenglied in einer axialen Zugbeziehung lösbar mit der Nabe (10) verbinden,
lösbar axial befestigt sind,
wodurch die axiale Zugkraft eine axiale Komprimierung eines ringförmigen Dichtungsglieds (21) bewirkt, das zwischen der ersten (33) und der zweiten (22) Fläche angebracht ist und eine kontinuierliche Dichtungswirkung um die ineinander eingreifenden Keilverzahnungen (19, 32) herum gewährleistet.

2. Kupplungsanordnung nach Anspruch 1, **dadurch gekennzeichnet, dass** das Kappenglied (40) eine Umfangsschürze (41) bildet, die axial an der radialen Schulter (34) in dem Hohlraum des Glockenglieds (30) anliegt.

3. Kupplungsanordnung nach Anspruch 1 oder 2, **dadurch gekennzeichnet, dass** die Befestigungsmittel (43) ein in eine mittlere Gewindebohrung (42) des Kappenglieds (40) eingeschraubtes und durch eine mittig durch die Nabe (10) verlaufende Axialbohrung (44) gestecktes Gewindeglied enthalten, das von außen festgezogen werden kann.

4. Kupplungsanordnung nach Anspruch 1 oder 2, **dadurch gekennzeichnet, dass** die Befestigungsmittel (43) einen an dem Kappenglied (40) befestigten oder damit integralen Stift enthalten, wobei der Stift durch eine Axialbohrung (44) gesteckt ist, die mittig durch die Nabe (10) verläuft, wobei der Stift weiterhin Schnappbefestigungsmittel (45) enthält, die eine Schnellverbindung mit der Nabe bereitstellen.

5. Kupplungsanordnung nach Anspruch 4, **dadurch gekennzeichnet, dass** der Stift (43) ein axial äußeres Ende mit einem Paar Greiffortsätzen (46) aufweist, die von der Bohrung (44) der Nabe axial nach außen vorragen, um mittels eines Werkzeugs elastisch einander angenähert zu werden und so die Schnappbefestigungsmittel (45) aus der Nabe (10) auszurücken.

6. Kupplungsanordnung nach Anspruch 1, **dadurch gekennzeichnet, dass** das Kappenglied (40) den inneren Hohlraum des Glockenglieds (30) nach außen hin verschließt.

7. Kupplungsanordnung nach Anspruch 2, **dadurch gekennzeichnet, dass** die Umfangsschürze (41) in einer im Glockenhohlraum ausgebildeten ringförmigen Nut (35) kraftschlüssig angebracht ist.

8. Kupplungsanordnung nach Anspruch 2, **dadurch gekennzeichnet, dass** die Umfangsschürze (41) ein in eine axial äußere Richtung weisendes freies Ende aufweist.

9. Kupplungsanordnung nach Anspruch 2, **dadurch gekennzeichnet, dass** die Umfangsschürze (41) ein in eine axial innere Richtung weisendes freies Ende aufweist.

10. Kupplungsanordnung nach einem der vorhergehenden Ansprüche, **dadurch gekennzeichnet, dass** die Keilverzahnung (19) des Antriebsrings (18) eine axial gerade Keilverzahnung ist und die Keilverzahnung (32) des röhrenförmigen Vorsprungs (31) eine Evolventenkeilverzahnung ist.

11. Kupplungsanordnung nach einem der Ansprüche 1 bis 10, **dadurch gekennzeichnet, dass** die Keilverzahnung (32) des röhrenförmigen Vorsprungs (31) eine axial gerade Keilverzahnung ist und die Keilverzahnung (19) des Antriebsrings (18) eine Evolventenkeilverzahnung ist.

12. Kupplungsanordnung nach einem der vorhergehenden Ansprüche, **dadurch gekennzeichnet, dass** der äußerste Durchmesser des Antriebsrings (18) kleiner ist als der maximale Durchmesser des inneren Lagerrings (14), der die zweite Fläche (22) bereitstellt.

13. Kupplungsanordnung nach einem der vorhergehenden Ansprüche, **dadurch gekennzeichnet, dass** die erste (33) und die zweite (22) Fläche zueinander weisende radiale Flächen sind.

## Revendications

1. Agencement de couplage entre une unité de roulement de moyeu pour une roue de véhicule automobile et un joint homocinétique associé, l'unité de roulement de moyeu comportant un moyeu rotatif (10) sur lequel est fixée une bague d'entraînement (18) pour fournir une transmission de couple au moyeu depuis un organe de cloche rotatif externe (30) du joint homocinétique, l'organe de cloche (30) ayant une saillie tubulaire (31) en relation télescopique avec la bague d'entraînement (18), avec une première surface d'extrémité (33) de la saillie tubulaire (31) en regard d'une deuxième surface (22) d'un organe rotatif (14) de l'unité de roulement de moyeu,
la bague d'entraînement (18) et la saillie tubulaire (31) ayant des cannelures respectives externes (19) et internes (32) s'engageant mutuellement,
**caractérisé en ce que** le moyeu et le joint homocinétique sont fixés axialement de manière amovible par
un organe de capuchon rigide (40) reçu dans la cavité de l'organe de cloche et en butée axiale contre un épaulement radial (34) formé dans l'organe de cloche, et
un moyen d'attache (43) reliant de manière amovible l'organe de capuchon au moyeu (10) dans une relation de traction axiale,
ladite traction axiale causant une compression axiale d'un organe d'étanchéité annulaire (21) qui est ajusté entre lesdites première (33) et deuxième (22) surfaces et qui assure une action d'étanchéité continue autour des cannelures d'engagement (19, 32).

2. Agencement de couplage selon la revendication 1, **caractérisé en ce que** l'organe de capuchon (40) forme une jupe circonférentielle (41) en butée axiale contre l'épaulement radial (34) dans la cavité de l'organe de cloche (30).

3. Agencement de couplage selon la revendication 1 ou 2, **caractérisé en ce que** le moyen d'attache (43) comporte un organe fileté vissé dans un alésage central fileté (42) de l'organe de capuchon (40) et ajusté à travers un alésage axial (44) s'étendant centralement à travers le moyeu (10) et qui peut être serré depuis l'extérieur.

4. Agencement de couplage selon la revendication 1 ou 2, **caractérisé en ce que** le moyen d'attache (43) comporte une goupille fixée ou formée d'une seule pièce avec l'organe de capuchon (40), la goupille étant ajustée à travers un alésage axial (44) qui s'étend centralement à travers le moyeu (10), la goupille comportant en outre un moyen de montage par encliquetage (45) assurant un raccord rapide au moyeu.

5. Agencement de couplage selon la revendication 4, **caractérisé en ce que** la goupille (43) a une extrémité axialement extérieure avec une paire d'appendices de préhension (46) saillant axialement vers l'extérieur de l'alésage (44) du moyeu de manière à être amenés élastiquement à proximité l'un de l'autre au moyen d'un outil afin de désengager le moyen de montage par encliquetage (45) du moyeu (10).

6. Agencement de couplage selon la revendication 1, **caractérisé en ce que** l'organe de capuchon (40) ferme la cavité interne de l'organe de cloche (30) vers l'extérieur.

7. Agencement de couplage selon la revendication 2, **caractérisé en ce que** la jupe périphérique (41) est ajustée de force dans une gorge annulaire (35) formée dans la cavité de la cloche.

8. Agencement de couplage selon la revendication 2, **caractérisé en ce que** la jupe périphérique (41) a une extrémité libre tournée dans une direction axialement externe.

9. Agencement de couplage selon la revendication 2, **caractérisé en ce que** la jupe périphérique (41) a une extrémité libre tournée dans une direction axialement interne.

10. Agencement de couplage selon l'une quelconque des revendications précédentes, **caractérisé en ce que** les cannelures (19) de la bague d'entraînement (18) sont des cannelures axialement droites, et les cannelures (32) de la saillie tubulaire (31) sont des cannelures en développante.

11. Agencement de couplage selon l'une quelconque des revendications 1 à 10, **caractérisé en ce que** les cannelures (32) de la saillie tubulaire (31) sont des cannelures axialement droites, et les cannelures (19) de la bague d'entraînement (18) sont des cannelures en développante.

12. Agencement de couplage selon l'une quelconque des revendications précédentes, **caractérisé en ce que** le diamètre le plus extérieur de la bague d'entraînement (18) est plus petit que le diamètre maximum de la bague de roulement interne (14) fournissant ladite deuxième surface (22).

13. Agencement de couplage selon l'une quelconque des revendications précédentes, **caractérisé en ce que** lesdites première (33) et deuxième (22) surfaces sont des surfaces radiales en regard l'une de l'autre.
